# EUROPEAN PATENT SPECIFICATION

(11) **EP 2 313 179 B1**
(45) Date of publication and mention of the grant of the patent: **08.02.2012**
(21) Application number: 09770854.9
(22) Date of filing: 23.06.2009
(51) Int. Cl.: B01D 53/62, C21C 5/52

(54) **COMBUSTION OF CO AND COMBUSTIBLES IN STEEL FURNACE OFFGASES**
VERBRENNUNG VON CO UND BRENNBAREN STOFFEN IN STAHLOFENABGASEN
COMBUSTION DE CO ET COMBUSTIBLES DANS LES GAZ DE DÉGAGEMENT DE FOURS À ACIER

(30) Priority: 26.06.2008 US 75958 P
(43) Date of publication of application: 27.04.2011
(73) Proprietor: Praxair Technology, Inc., Danbury, CT 06810 (US)
(72) Inventor: WU, Kuang, Tsai, East Amherst NY 14051 (US); EVENSON, Euan, John, Williamsville NY 14221 (US)
(74) Representative: Schwan - Schwan - Schorer
(86) International application number: PCT/US2009/048211
(87) International publication number: WO 2009/158320

(56) References cited:
- EP-A- 0 693 561
- WO-A-96/06954
- US-A- 5 904 895

## Description

### Field of the Invention

This invention relates to treatment of offgas streams produced by steel furnaces.

### Background of the invention

During steel production in an electric arc furnace (EAF) a large volume of high temperature off-gas, which contains high concentrations of combustible gases such as carbon monoxide (CO) and hydrogen (H₂), is produced inside the EAF vessel. This off-gas can reach a temperature of 1648.9 °C (3000 F) or higher, and CO and H2 peak concentrations in the off-gas can reach up to 60% and 35%, respectively. To reduce electrical energy consumption, the thermal energy contained in the EAF off-gas needs to be recovered as much as possible inside the EAF vessel.

One way is to recover chemical heat of CO and H₂ combustion using oxygen lances for combustion of the combustibles inside the vessel. Another way to recover the energy from the off-gas stream is to use the heat of the stream to preheat scrap that is going to be fed into the EAF. In one example, the EAF off gas is piped into a conduit where the scrap is moving counter current to the direction of the off-gas flow, and the hot off-gas preheats the scrap by direct heat transfer. Air is injected into the scrap preheating conduit to provide oxygen for the combustion of the CO and H₂. The conduit may have auxiliary burners installed to augment the heating of the scrap to a desired preheat temperature.

If scrap preheating is not used then once the off-gas leaves the EAF vessel, the remaining energy contained in the unburned CO, H₂, and other combustibles may or may not be recovered. For safe operation of the furnace and for environmental reasons, the remaining gaseous combustibles in the off-gas are burned to sufficiently complete levels, so that the thus-treated off-gas can then be further cleaned downstream in the duct and discharged into the atmosphere. For example, high temperature combustibles such as CO and H₂ in the off-gas are typically burned with air introduced from an "air gap" in a water-cooled exhaust duct connecting to the "fourth hole" of the EAF furnace (herein called "EAF exhaust duct"). Downstream of the EAF exhaust duct, a "dropout box" may also function as a post combustion chamber for additional CO and H₂ combustion. Combustion air for the dropout box may be introduced upstream of the box or in the box by lancing. Part of the flue gas stream exiting from the dropout box may be recycled back into the EAF vessel, if the operator wishes to recover the flue gas energy for melting purpose. Methods for carrying out post combustion in an electric are furnace are described in WO-A-96/06954, EP-A-0693561 and US 5904895.

Despite the above efforts, the presence of small amounts of CO in the off-gas (termed "CO slip") is still an operational issue for many EAF operators. This is because during an EAF heat cycle, there are large variations in off-gas composition, volume, and temperature. These variations in off-gas properties are further complicated by the varying amount of the air infiltration and the changing composition of the scrap being fed. Thus, keeping the bag house CO emissions in check during the whole EAF heat cycle represents challenges to the furnace operators. EAF operators face heavy financial penalties should the CO emissions exceed regulatory limits.

In order to avoid exceeding emissions limits for CO and other combustibles, some EAF operators may opt to operate their furnaces conservatively in order to meet the emissions limits, but at the expense of furnace energy efficiency. For example, an operator may set the furnace or the exhaust duct pressures low to induce excessive amount of air infiltration for completing CO burnout. This excess amount of air can increase the total flue gas volume and the heat loss associated with the off-gas, thus decreasing the furnace thermal efficiency. In other instances, the production capacity of an EAF furnace can be substantially limited by the ability of the downstream ducts or dropout box to complete the combustion of the CO, H₂, and other combustibles. If scrap preheating is used, EAF operators may also face the issue of containing fugitive odors and limiting the formation of undesired byproducts such as dioxins in the flue gas ducts.

The foregoing concerns are also applicable to other apparatus used in steelmaking, such as basic oxygen furnaces (BOF), ladle refining furnaces, and argon-oxygen decarburizing furnaces.

### Brief Summary of the Invention

In one aspect of the invention, a method for treating an offgas stream from a steel furnace comprises
(A) providing an offgas stream having a temperature lower than 1093.3°C (2000F) by obtaining offgas from the atmosphere above the surface of molten steel in a furnace which obtained offgas contains carbon monoxide in an amount higher than 500 ppm, admitting air into said obtained offgas and cooling said obtained offgas to the extent necessary so that it is at a temperature lower than 1093.3 °C (2000F);
(B) mixing fuel and oxygen and combusting a portion of the oxygen in the mixture with said fuel in a chamber to form a hot oxygen stream emerging from an outlet in said chamber that contains oxygen, wherein the residence time of said combustion in said chamber is long enough that said hot oxygen stream has a temperature higher than the temperature of the offgas stream to which it is added in step (C) and said residence time is short enough that said hot oxygen stream contains products of said combustion including radicals selected from the group consisting of radicals corresponding to the formulas O, H, OH, C₂H, CH₂, CⱼH₂ⱼ₊₁ or CⱼH₂ⱼ₋₁ wherein j is 1-4, and mixtures of two or more of such radicals;
(C) feeding the hot oxygen stream formed in step (B) into the offgas stream provided in step (A) to raise the temperature of the offgas in said provided stream to a temperature higher than 593.3 °C (1100F) that is higher than the temperature of the offgas to which said hot oxidant stream is added, wherein the hot oxygen stream is added at a rate sufficient to convert carbon monoxide in the offgas to which it is added to carbon dioxide, thereby lowering the carbon monoxide content of said offgas.

In a preferred aspect of the foregoing method, metal such as scrap metal is fed into one of the aforementioned furnaces, and before said metal is fed into the furnace it is contacted in direct heat transfer with said offgas obtained from said furnace to heat the metal and to cool said obtained offgas.

In another preferred aspect of the foregoing method, said scrap metal contains organic material that is volatilized into said obtained offgas by said heat transfer with said obtained offgas stream, and said hot oxygen stream is mixed together with said cooled offgas stream at a rate sufficient to convert said organic material to carbon dioxide and water vapor.

This invention involves injecting a stream or streams of high-momentum hot oxygen to destroy low concentration levels of off-gas combustibles, particularly where the off-gas temperature is already below the spontaneous ignition temperature of the off-gas combustibles. Because the injected oxygen is hot and the jet momentum is high, the hot oxygen will mix rapidly with the offgas, thus enhancing the ability of the radicals in the hot oxygen stream to destroy combustibles in the offgas even though the offgas temperature is below the combustibles' ignition temperatures. These streams of high momentum hot oxygen are produced by the hot oxygen generator described herein.

### Brief Description of the Drawings

Figure 1 is a flowsheet showing a typical steel furnace system with which the present invention can be practiced.

Figure 2 is a schematic representation of a hot oxygen generator useful in the present invention.

Figure 3 is a cross-sectional view of a hot oxygen generator useful in the present invention.

Figure 4 is a flowsheet of a portion of an alternate embodiment of the present invention.

Figure 5 is a flowsheet of yet another embodiment of the present invention.

Figure 6 is a flowsheet of another embodiment of the present invention.

### Detailed Description of the Invention

While the following description of the present invention refers to the Figures, the invention is not to be considered to be confined to the embodiments illustrated in the Figures.

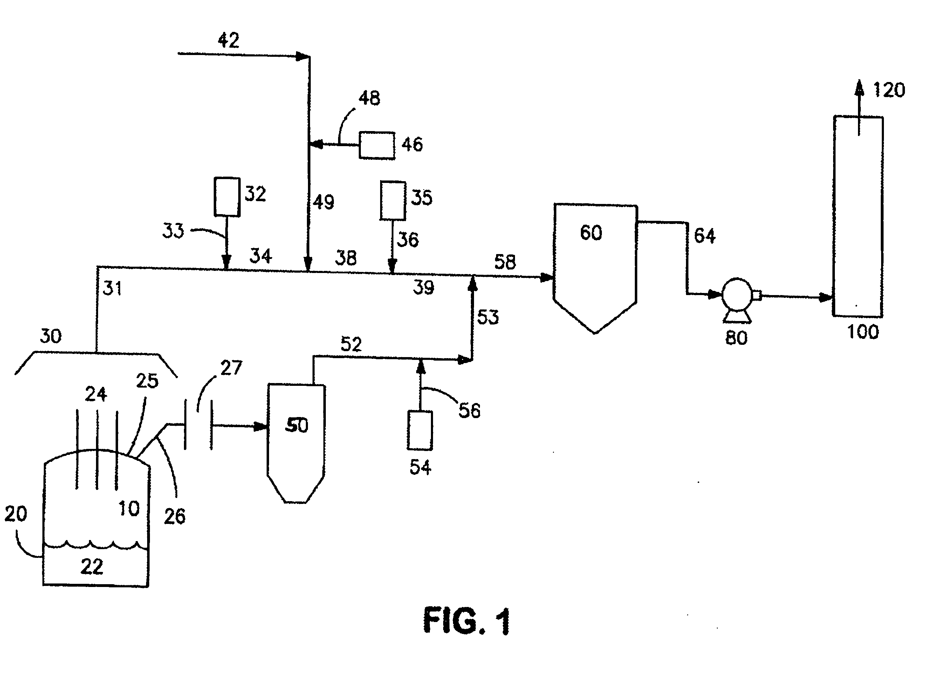

Figure 1 illustrates several different possible applications of this invention to control CO emissions from steelmaking furnaces. Any one or more of these applications can be practiced, separately or as an overall system for controlling CO emissions.

Referring to Figure 1, offgas 10 is generated in an electric arc furnace ("EAF") 20 which has electrodes 24 over molten steel 22. While three electrodes 24 are shown, other numbers of electrodes can be employed, and the EAF can be operated with alternating current or direct current. The offgas stream 10 flows through an outlet (sometimes referred to as a "4^{th} hole") 25 into a conduit (or duct) 26, and then through air gap 27 which is an opening in duct 26 through which air from the surrounding atmosphere can enter into duct 26. Air is admitted into the offgas stream, preferably via air gap 27 and/or other inlets in the duct that carries the offgas. The air can be admitted into the offgas with or without the aid of a fan or impeller, preferably without.

The offgas stream downstream of air gap 27 passes into dropout box 50. Larger particulate material entrained in the offgas is separated from the offgas in the dropout box 50. Stream 52 is the offgas stream exiting from the dropout box 50. The dropout box 50 may be used as a combustion chamber for combustion of combustible products in the offgas, if lances for combustion oxidant injection and/or burners are installed (not shown).

The offgas is preferably at a temperature of 1093.3°C (2000F) or lower when a hot oxygen stream is fed into the offgas as described herein. If the offgas as formed is already 1093.3 °C (2000F) or cooler, then the offgas does not need to be cooled. If the offgas temperature is above 1093.3 °C (2000F), then cooling of the offgas is necessary. Typically, offgas as recovered from steel furnace atmospheres such as an EAF is hotter than 1093.3°C (2000F). The admission of air into the offgas stream via the air gap 27 and any other air inlets cools the offgas. Additional cooling as necessary can be provided by passing the duct in which the offgas is flowing through a water jacket or other equivalent mechanism that withdraws heat from the offgas through and away from the wall of the duct. Cooling of the offgas can also be provided by radiative and/or convective cooling of the duct to the ambient atmosphere.

Hot oxygen stream 56, which can be produced by hot oxygen generator 54 as described herein, is fed into stream 52 to form stream 53.

Offgas 10 formed in furnace 20 can also be recovered by rising into canopy 30 and into canopy duct 31. In this embodiment, air is drawn into duct 31 from the surrounding atmosphere. Hot oxygen stream 33, which can be produced by hot oxygen generator 32 as described herein, is fed into stream 31 to form stream 34.

Offgas streams that are advantageously treated by this invention can also come from other sources in a steel plant, such as ladle refining furnaces and/or argon-oxygen decarburizing furnaces. Stream 42 represents any such offgas stream, which can also be a stream formed by combining the offgas streams from two or more ladle refining furnaces, two or more argon-oxygen decarburizing furnaces, or from both types of furnaces. Hot oxygen stream 48, which can be produced by hot oxygen generator 46 as described herein, is fed into stream 42 to form stream 49.

As stated above, any one of these hot oxygen generators and streams can be employed, or several can be employed to treat CO content of several different offgas streams. In addition, a second (or additional) hot oxygen generator can be employed to feed a hot oxygen stream into an offgas stream downstream from a location where a hot oxygen stream has already been fed. For example, hot oxygen stream 36 from hot oxygen generator 35 can be fed even where a hot oxygen stream such as streams 33 and/or 48 have been fed upstream. A hot oxygen stream that is fed as stream 36 is, downstream from where another hot oxygen stream is fed, can be fed continuously, or can be turned off and on intermittently as a backup source of hot oxygen where needed to provide sufficient CO destruction during a specific time period of the heat cycle where CO contents are elevated above their normal levels. In the embodiment shown in Figure 1, streams 34 and 49 combine to form stream 38 into which hot oxygen stream 36 can be optionally continuously or intermittently fed, forming stream 39.

The streams formed upon addition of the hot oxygen into the offgas stream or streams, such as streams 39 and 53 in the case of Figure 1, can be combined to form stream 58 which passes into a baghouse 60 for off-gas clean up by removal of fine particulate material. If desired, streams such as 39 and 53 can be fed separately to baghouse 60, or can be fed to separate baghouses. Stream 64 exiting from baghouse 60 is drawn by a fan, such as induced draft fan 80, and the cleaned offgas is discharged into the atmosphere through opening 120 at the top of stack 100. The fan 80, if present, can also help draw offgas streams into duct 26, and/or canopy 30 and/or into stream 42, as the case may be, as depicted in Figure 1.

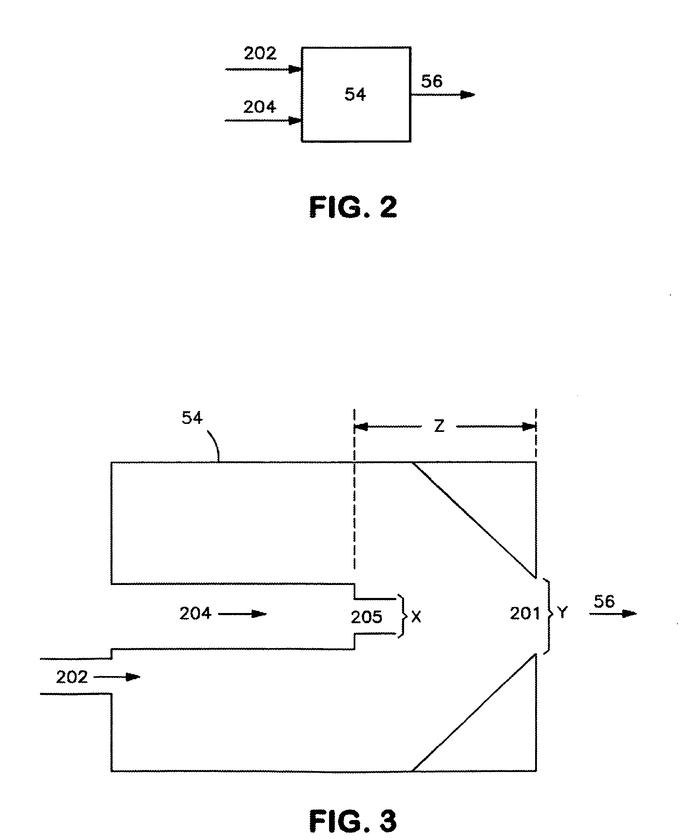

The formation of a hot oxygen stream, such as streams 56, 33, 48 and/or 36, formed from its corresponding hot oxygen generator, is described with reference to Figures 2 and 3, using hot oxygen generator 54 as an example. Stream 202 of oxidant having an oxygen concentration of at least 30 volume percent and preferably at least 85 volume percent is provided into hot oxygen generator 54 which is preferably a chamber or duct which communicates through a suitable opening in generator 54 with the duct that carries the offgas stream into which the hot oxygen is to be fed. Most preferably the oxidant 202 is technically pure oxygen having an oxygen concentration of 99.5 volume percent or more. The oxidant 202 fed to the hot oxygen generator has an initial velocity which is generally within the range of from 15.2 to 91.4 m/s (50 to 300 feet per second (fps)) and typically will be less than 61.0 m/s (200 fps).

Stream 204 of fuel is provided to hot oxygen generator 54 through a suitable fuel nozzle which may be any suitable nozzle generally used for fuel injection. The fuel may be any suitable combustible fluid examples of which include natural gas, methane, propane, hydrogen, refinery fuel gas, landfill offgas, syngas, carbon monoxide, and coke oven gas. The presence of hydrogen in the fuel fed to the hot oxygen generator 54 is advantageous in assisting conversion of CO to CO₂ evidently because the combustion that forms the hot oxygen stream promotes the formation of (nonionic) OH and O radicals in the hot oxygen stream. Preferably the fuel is a gaseous fuel. Liquid fuels such as number 2 fuel oil may also be used, although it would be harder to maintain good mixing and reliable and safe combustion with the oxygen with a liquid fuel than with a gaseous fuel.

The fuel 204 provided into the hot oxygen generator 54 combusts there with oxidant to produce heat and combustion reaction products such as carbon dioxide and water vapor. Preferably, no more than about 35 percent of the oxygen of the oxidant combusts with the fuel. If more than about 35 percent of the oxygen combusts with the fuel in the hot oxygen generator, then appropriate measures should be taken such as using refractory materials of construction and/or employing a heat removal feature such as a water wall to keep the temperature of the remaining oxygen from increasing to undesirable levels.

The combustion reaction products generated in the hot oxygen generator 54 may mix with some of the remaining oxygen of the oxidant 202, thus providing heat to the remaining oxygen and raising its temperature. Preferably, the fuel is provided into the hot oxygen generator 54 at a high velocity, typically greater than 61.0 m/s (200 fps) and generally within the range of from 152.4 to 457.2 m/s (500 to 1500 fps). The high velocity serves to entrain oxidant into the combustion reaction products thus promoting combustion of the fuel in the chamber.

Generally the temperature of remaining oxidant within the oxidant supply duct is raised by at least about 260 °C (500 F), and preferably by at least about 537.8 °C (1000 F). It is preferred that the temperature of the remaining oxygen not exceed about 1648.9 °C (3000 F) to avoid overheating problems with supply ducts and nozzles.

As the temperature of the remaining oxygen within the hot oxygen generator 54 is increased, the requisite supply pressure of the oxygen to achieve any given oxygen injection velocity into the offgas decreases. For example, for injection of the oxygen at ambient temperature the requisite pressure exceeds 149.6 kPa (7 pounds per square inch gauge (psig)) in order to inject the oxygen into the offgas at a velocity of 243.8 m/s (800 fps). As the oxygen temperature increases, the requisite pressure decreases sharply. At a temperature of 815.6 °F (1500 F) the requisite pressure is 112.7 kPa (1.65 psig) and at a temperature of 1648.9 °C (3000F) the requisite pressure is only 107.6 kPa (0.91 psig). At temperatures exceeding 1649 °C (3000F) there is little additional benefit, thus providing another reason for not exceeding 35 percent oxygen combustion with the fuel. Thus, generation of hot oxygen in this manner can provide a high velocity hot oxygen stream 56 to the offgas without the need for a high supply pressure thus reducing or eliminating the need for compressing oxygen prior to passing it into the offgas which would otherwise be necessary if the oxygen source pressure is not high.

The combustion that occurs in hot oxygen generator 54 should be carried out in a manner such that the hot oxygen stream 56 that emerges from generator 54 contains one or more radicals corresponding to the formulas O, H, OH, C₂H, CH₂, CⱼH₂ⱼ₊₁ or CⱼH₂ⱼ₋₁ wherein j is 1-4, and mixtures of two or more of such radicals. This can be achieved by providing that the residence time of the reactants (fuel and oxygen) within the hot oxygen generator is long enough to enable combustion reaction of fuel and oxygen to occur in the hot oxygen generator producing a stream having a temperature higher than the temperature of the offgas into which the stream is to be fed, and simultaneously providing that said residence time is short enough that at least some of the above-mentioned radicals are present.. The residence time, in turn, is determined by the volume of the space within generator 54, by the feed rates of fuel stream 204 and of oxidant stream 202 into generator 54, and by the size of the exit orifice through which the hot oxygen stream 56 emerges from generator 54. Preferred residence times are about 1 to 2 msec.

Referring to Figure 3, a cross-section of hot oxygen generator 54 (or generator 32, 34 and 46) is shown. Fuel 204 emerges from orifice 205 whose diameter is "X". Oxygen stream 202 flows in front of orifice 205 and combusts with the fuel. The resulting hot oxygen stream 56 emerges from generator 54 through orifice 201, whose diameter is "Y". The distance from orifice 205 to orifice 201 is "Z". In general, the combination of the dimensions of a hot oxygen generator, the fuel and oxygen feed rates to that generator, and the exit orifice dimensions, that provide residence time which can produce a hot oxygen stream that has the desired temperature and the desired content of combustion radicals so as to reduce the CO content of an offgas stream into which the hot oxygen stream is fed, includes the following:
X: 0.3 -1.0 mm
Y: 1.5 - 2.65 mm
Z: 2.54 - 7.62 cm (1.0 - 3.5 inches)
Fuel (natural gas) feed rate into the generator: 56.3-3% l/n (2 - 14 scfh)
Oxygen feed rate into the generator: 0.45 - 2.04 m³/h (16 - 72 scfh)
Pressure within the generator: 104.1 - 467.5 kPa (15.1 - 67.8 psia)

The hot oxygen stream 56 preferably contains at least 75 % (volume) O₂. A typical composition for this stream is about 80 % O₂, 12 % H₂O, 6 % CO₂, some highly reactive radicals such as (nonionic) OH, O, and H which are particularly effective to initiate and oxidize CO to CO₂, and the aforementioned radicals. The hot oxygen stream 56 exits through orifice 201 and is fed into the offgas at high velocity and momentum, which results in accelerated mixing between the hot gas and the offgas.

The hot oxygen stream 56 (as well as streams 33, 36 and/or 48, and other streams generated and used in the practice of this invention) obtained in this way typically has a temperature of at least 871.1 °C (1600F) and preferably at least 1093.3 °C (2000 F). Generally the velocity of the hot oxygen stream will be within the range of from 152.4 to 1371.6 m/s (500 to 4500 feet per second (fps)), preferably 243.8 to 609.6 m/s (800 to 2000) or to 762 m/s (2500 fps) and will exceed the initial velocity by at least 300 fps. In a preferred embodiment this velocity is at 340.3 m/s (Mach 1).

The description in U.S. Patent No. 5,266,024, the content of which is hereby incorporated herein by reference, further describes formation of the high momentum hot oxygen stream.

The high velocity hot oxygen stream is believed to entrain the offgas into which it is fed through jet boundaries by velocity gradients or fluid shear, and by turbulent jet mixing. The gaseous stream that is formed upon combining the offgas and the hot oxygen stream, which mixture may include reaction products of the hot oxygen and the offgas, has a temperature of at least 762 m/s (10000F), preferably at least 676.7 °C (1250F), although advantages can be realized when the temperature of this mixture is above 760 °C (1400F).

In each use of the hot oxygen stream, such as where hot oxygen stream 56 is fed into offgas stream 52, stream 56 is fed at high momentum into the steel furnace offgas. The desired reaction of the hot oxygen with the offgas is enhanced by increasing the intimacy of mixing between the hot oxygen and the offgas. The intimate mixing can be promoted by dividing the hot oxygen into a plurality of streams and feeding these streams into the offgas, or by feeding the hot oxygen across or countercurrent to the offgas. Preferably, the intimate mixing is promoted by providing physical structure, within the duct such as the duct carrying offgas stream 52, that promotes contact between the hot oxygen and the offgas. Examples of such structure include wire mesh that the gases have to flow through, or baffles. The hot oxygen and the offgas mix, during which the hot oxygen burns CO in the offgas to CO₂. The resulting gas mixture such as stream 53 comprises the products of these reactions between the hot oxygen and the offgas.

The preferred location to place a hot oxygen generator is so that the hot oxygen stream is fed into the offgas where the temperature of the offgas is too low for injection of air alone to be effective in destroying sufficient amounts of CO in the offgas. For instance, the hot oxygen generator can effectively be used where it feeds the hot oxygen stream to regions where the temperature of the offgas is up to 982.2 °C (1800F), such as 537.8 to 982.2 °C (1000F to 1800F) preferably 593.3 to 871.1 °C (1100F to 1600F) or even up to 815.6 to (1500F) or even 760 °C (1400F). Even at these temperatures, destruction of CO can occur to lower the CO content of the offgas to less than 500 ppm and even to 100 ppm or less. After injection of the hot oxygen stream, the combined stream preferably has a temperature of 732.2 to 787.8 °C (1350 to 1450F). Typical injection velocities of the hot oxygen stream can be 152.4 to 1066.8 m/s (500 to 3500 fps) preferably 304.8 to 853.4 m/s (1000 to 2800 fps).

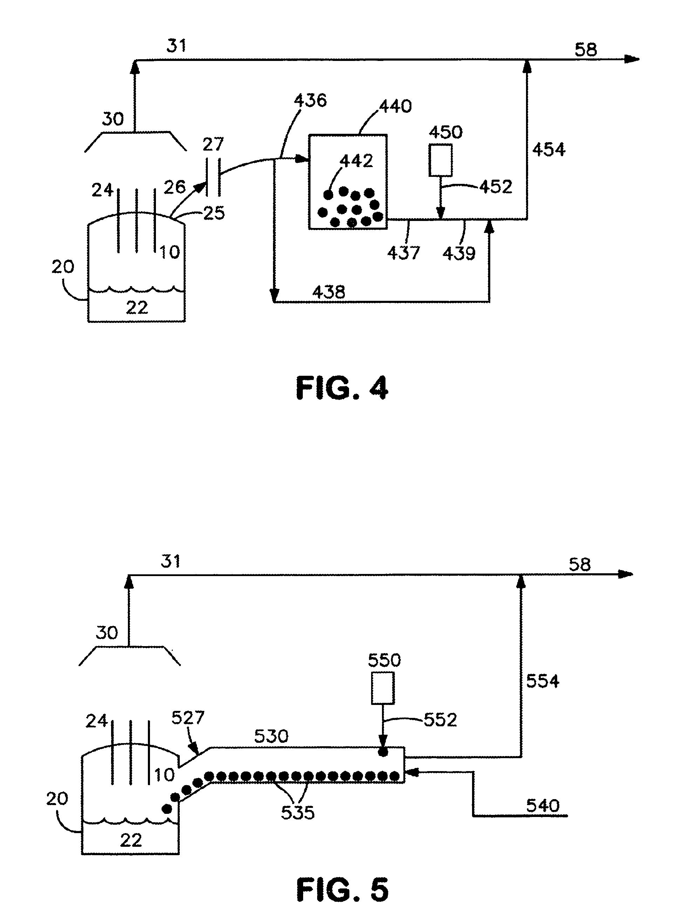

Figures 4, 5 and 6 illustrate embodiments of this invention in which feed material for the steel furnace, such as scrap metal, is preheated by offgas from the furnace before the feed material is fed into the furnace. Reference numerals in Figures 4, 5 or 6 that also appear in Figure 1 have the same meanings that they have for Figure 1.

As shown in Figure 4, EAF offgas 10 flows through a 4^{th} hole 25 and subsequently a conduit 26, then through an air gap 27. After the air gap, the offgas stream splits into two streams 436 and 438. Stream 436 goes into a preheater 440 such as a so-called bucket preheater, whereas stream 438 bypasses preheater 440. The preheater 440 is periodically charged with feed material such as scrap charge 442, which is preheated by the hot offgas stream 436 when it flows through the scrap charge. The offgas, which has been cooled by the heat transfer to the charge 442, flows out of the preheater 440 as stream 437. Heated charge 442 is fed to EAF 20.

Hot oxygen generator 450, configured and operated as described herein with respect to generator 54, is installed to feed hot oxygen stream 452 into stream 437 downstream of preheater 440. The hot oxygen contained in hot oxygen stream 452 mixes rapidly with stream 437, and destroys CO in stream 437. The resulting stream 439 combines with stream 438 to form stream 454, which in turn can optionally be combined with stream 31 from the EAF canopy 30, to form stream 58. Off-gas streams 454 and 58 can be processed by downstream pollution control equipment, as described herein.

Figure 5 illustrates another embodiment of the use of a hot oxygen stream formed as described herein, here to control gaseous emissions inside a continuously operating preheater of feed material such as scrap metal. In this case, scrap charge 535 is fed continuously by a feeder 540 through preheater 530 which can be an enclosed space such as a pipe, equipped with a conveyor for the feed material. Offgas stream 10 flows through preheater 530 in a direction countercurrent to the charge 535, wherein the charge material is heated by heat transfer from offgas 10 and offgas 10 is cooled. Air is admitted through one or more openings or vents 527 provided in the preheater and/or in the passage in which the offgas flows going to the preheater. After being preheated, the scrap charge drops into the molten steel 22 inside the EAF 20 for steelmaking. Hot oxygen generator 550, configured and operated as described herein with respect to generator 54, is installed close to the end of the scrap feeder 540 and generates hot oxygen stream 552 which is fed into offgas stream 10 in preheater 530. The hot oxygen contained in stream 552 mixes rapidly with stream 10, to destroy CO in the offgas. The resulting stream 554 flows out of the preheater 530 and can optionally combine with, for instance, stream 31 from the EAF canopy 30 to form stream 58 which can be further processed as described herein.

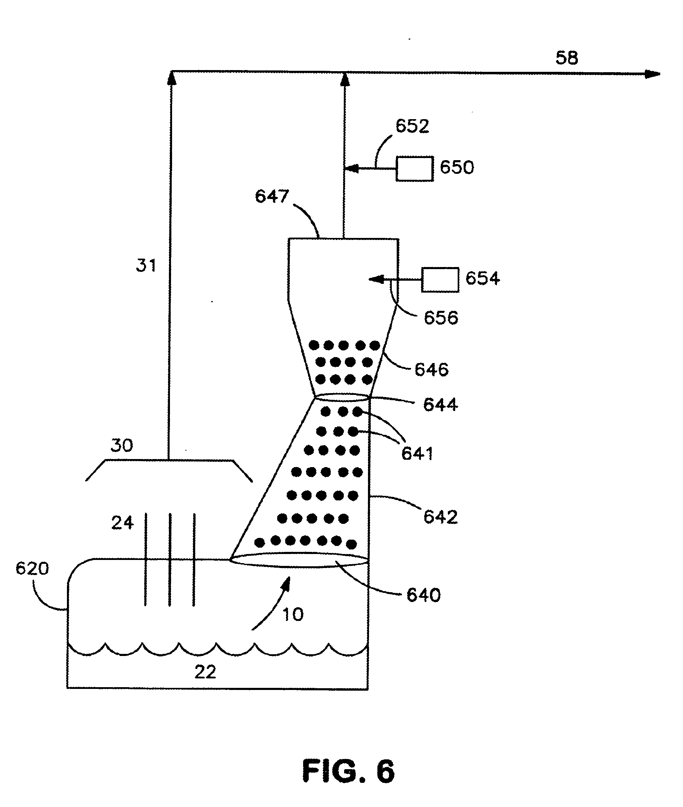

Figure 6 shows yet another application of this invention, namely, to a shaft furnace 620 equipped with a shaft section 642 positioned over the furnace to receive offgas from the furnace, and hood section 646 positioned over shaft section 642 to receive offgas from shaft section 642. In this example, feed material such as scrap metal is charged into the hood and the shaft sections through door 647. The charged scrap 641 (represented as solid dots as is feed material 535 in Fig. 5) is held in place by plates 640 and 644 (commonly called "fingers") which have openings through which the offgas can flow. Offgas 10 flows through the charged scrap 641 and preheats the charged scrap as it flows through the scrap. The preheated scrap is then permitted to feed out of shaft section 642 into the molten steel 22 in furnace 620. The offgas 10 is cooled by this heat transfer to the charged scrap 641. Hot oxygen stream 656 from hot oxygen generator 654, configured and operated as described herein with respect to generator 54, is injected into and mixes with the offgas stream 10 at the top of the hood section 646. A hot oxygen generator 650 can also be installed to feed a hot oxygen stream 652 into the offgas 10 after the offgas 10 leaves the hood section 646. Air is admitted into the offgas through openings in shaft section 642 and/or in hood section 646 and/or where either of those sections joins the plates 640 or 644.

In any of these embodiments, or any other embodiments in which offgas from a steelmaking vessel is used to preheat feed material for the vessel, the feed material may contain organic material such as residues or waste material. When organic material is present in or on the feed material, the preheating of the feed material as described herein may create gasified emissions, by which is meant the gaseous state of organic material that was in or on the feed material, or gaseous organic byproducts formed by exposing said organic material to the temperatures encountered in bringing the feed material into heat transfer contact with the offgas, or mixtures thereof. These gaseous emissions may contain chemical components which can cause unpleasant odors, or which can be harmful if the components include hazardous substances such as dioxins or if the components can form into hazardous substances when exposed to the usual preheating conditions.

Feeding the hot oxygen stream formed as described herein either into the offgas stream within the apparatus in which the offgas preheats feed material, or downstream of the apparatus in which the off gas preheated feed material, has the additional benefit of removing or even completely eliminating chemical (organic) components by converting them into carbon dioxide and water.

To achieve most satisfactory CO conversion to carbon dioxide, as well as removal or elimination of potentially hazardous chemical substances that enter the offgas from feed material that is preheated by the offgas, the following three criteria are important: (1) achieve good mixing between the hot oxygen stream and the offgas; (2) the temperature of the mixture that is formed of the hot oxygen stream and the offgas is in the proper range; and (3) the mixture has enough residence time for completing CO burnout to CO₂. Operating within the conditions described herein satisfies these criteria.

Compared to conventional lancing of oxygen at cold or ambient temperatures, or to installing and using post combustion burners in the offgas duct as the offgas exits the furnace, the use of the hot oxygen stream as described herein has the following advantages:
- The hot oxygen stream provides necessary heat to the offgas where local offgas temperatures may be too low for effective CO destruction.
- The hot oxygen generator described herein delivers the hot oxygen at high jet momentum for better mixing to destroy even low concentration levels of CO.
- The injection of the hot oxygen has little impact on the overall gas residence time in the offgas duct, since the volume of the oxygen injected is generally small (1%∼3 % vol.) compared to the volume of the offgas.
- The hot oxygen generator is very compact in design, which provides flexibility in field installation when the duct or installation space is severely constrained.
- The hot oxygen generation described herein destroys CO without increasing the NOx content of the offgas.

Using the hot oxygen generator and the hot oxygen stream as described herein to destroy CO in the offgas stream provides the following process advantages:

### • Increased steelmaking furnace capacity (i.e., production rate)

This invention enables the capacity of an existing furnace to be boosted if the production rate of that furnace is constrained by high off-gas CO emissions. If an EAF furnace increases its production rate, more offgas volume will be generated. Due to this increased offgas volume, air-based CO burnout measures installed upstream of the ducts may not be able to combust CO to a level that meets emissions limits at the baghouse. The other possible outcome with the increased production rate is that the EAF ducts may become limited by the capacity of the fan, meaning that there is a maximum amount of air that an existing fan can process for CO combustion. With this invention, an operator can let the existing air-based CO burnout system operate at its maximum ability to destroy CO. He can then use a hot oxygen generator installed downstream of the air systems for final burnout of the CO, where air based systems are no longer effective for CO destruction.

### • Improve furnace efficiency (i.e., electricity consumption per ton of steel produced)

Many furnace operators control their furnaces in very conservative ways to try to be sure that all CO and other combustibles in plant effluent meet regulatory emissions limits. For example, an operator may increase duct suction pressure to introduce excessive amounts of air into the duct for post combustion of CO, H₂, and other combustibles. By supplying high percentages of excess air for post combustion, the furnace may meet CO emissions limits but at the expense of its thermal efficiency. This is because high air infiltration increases offgas volume and its total heat contents. Without external flue gas recirculation, the available heat contained in the offgas is a heat loss. Higher offgas volume also increases operating costs in downstream off-gas cleaning equipments.

### • Avoid regulatory penalties

This invention provides a simple and effective way for furnace operators to meet their specific CO emissions goals. The hot oxygen generator becomes an assuring device for the furnace where the operating environment is dynamic and transient in nature. With this invention, operators can operate their furnaces with more flexibility to meet changing process needs, knowing that any CO slip to downstream ducts will be destroyed by the hot oxygen stream whether that stream is fed continuously or periodically when the need arises.

## Claims

1. A method for treating an offgas stream from a steel furnace comprising
(A) providing an offgas stream (52) having a temperature lower than 1093.3 °C (2000F) by obtaining offgas (10) from the atmosphere above the surface of molten steel (22) in a furnace (20) which obtained offgas contains carbon monoxide in an amount higher than 500 ppm, admitting air into said obtain offgas (10) and cooling said obtained offgas to the extent necessary so that it is at a temperature lower than 1093.3 °C (2000F); **characterised in**
(B) mixing fuel (204) and oxygen and combusting a portion of the oxygen in the mixture with said fuel in a chamber (54) to form a hot oxygen stream (56) emerging from an outlet in said chamber (54) that contains oxygen, wherein the residence time of said combustion in said chamber (54) is long enough that said hot oxygen stream has a temperature higher than the temperature of the offgas stream to which it is added in step (C) and said residence time is short enough that said hot oxygen stream contains products of said combustion including radicals selected from the group consisting of radicals corresponding to the formulas O, H, OH, C₂H, CH₂, CⱼH₂ⱼ₊₁ or CⱼH₂ⱼ₋₁ wherein j is 1-4, and mixtures of two or more of such radicals;
(C) feeding the hot oxygen stream (56) formed in step (B) into the offgas stream (52) provided in step (A) to raise the temperature of the offgas in said provided stream to a temperature higher than 593.3 °C (1100F) that is higher than the temperature of the off-gas to which said hot oxidant stream is added, wherein the hot oxygen stream (56) is added at a rate sufficient to convert carbon monoxide in the offgas to which it is added to carbon dioxide, thereby lowering the carbon monoxide content of said offgas.

2. A method according to claim 1 further comprising heating feed material (442; 535) by direct heat transfer from said obtained offgas (436), before said hot oxygen stream (56) is fed into said offgas stream, and feeding said heated feed material into said molten steel.

3. A method according to claim 1 or claim 2 wherein the offgas stream (52) into which said hot oxidant stream (56) is fed has a temperature of up to 982.2 °C (1800F).

4. A method according to claim 1 or claim 2 wherein the hot oxygen stream (56) formed in step (B) is fed into the off-gas stream (52) in step (C) at a velocity of at least 152.4 m/s (500 feet per second).

5. A method according to claim 1 or claim 2 wherein the hot oxygen stream (56) formed in step (B) is fed into the offgas stream (52) in step (C) at a velocity of 340.3 m/s (Mach 1).

6. A method according to claim 1 or claim 2 wherein in step (C) the carbon monoxide content of said offgas is lowered to below 500 ppm.

7. A method according to claim 2 wherein said feed material comprises organic matter, and the offgas into which said hot oxygen stream (56) is fed contains gaseous organic emissions formed by said heating of said feed material, and said hot oxygen stream fed into said offgas converts said gaseous organic emissions into products comprising carbon dioxide and water.

## Patentansprüche

1. Verfahren zum Behandeln eines Abgasstromes von einem Stahlofen, bei welchem:
(A) ein Abgasstrom (52) mit einer Temperatur von weniger als 1093.3 °C (2000 F) bereitgestellt wird, indem Abgas (10) von der Atmosphäre oberhalb der Oberfläche von schmelzflüssigem Stahl (22) in einem Ofen (20) erhalten wird, wobei das erhaltene Abgas Kohlenmonoxid in einer Menge von mehr als 500 ppm erhält, wobei ein Eintrag von Luft in das erhaltene Abgas (10) zugelassen wird und das erhaltene Abgas ausreichend gekühlt wird, so dass dieses eine Temperatur von weniger als 1093.3 °C (2000 F) hat;
**dadurch gekennzeichnet, dass**
(B) Brennstoff (204) und Sauerstoff gemischt werden und ein Teil des Sauerstoffs in dem Gemisch mit dem Brennstoff in einer Kammer (54) verbrannt wird, um einen von einem Auslass in der Kammer (54) austretenden heißen Sauerstoffstrom (56) zu bilden, der Sauerstoff enthält, wobei die Verweildauer der Verbrennung in der Kammer (54) ausreichend lang ist, so dass der heiße Sauerstoffstrom eine Temperatur hat, die höher als die Temperatur des Abgasstromes ist, zu welchem dieser in Schritt (C) hinzu geführt wird, und wobei die Verweildauer ausreichend kurz ist, so dass der heiße Sauerstoffstrom Verbrennungsprodukte aufweist, die Radikale beinhalten, die aus der aus Radikale mit den Formeln O, H, OH, C₂H, CH₂, CⱼH₂ⱼ₊₁ oder CⱼH₂ⱼ₋₁ entsprechen, wobei j 1 bis 4 ist, sowie Gemische von zwei oder mehr dieser Radikale;
(C) der heiße Sauerstoffstrom (56), der in Schritt (B) gebildet wurde, in den in Schritt (A) bereitgestellten Abgasstrom (52) eingeleitet wird, um die Temperatur des Abgases in dem bereitgestellten Strom auf eine Temperatur von über 593.3 °C (1100 F) anzuheben, so dass diese höher als die Temperatur des Abgases ist, zu welchem der heiße Sauerstoffstrom zugesetzt wird, wobei der heiße Sauerstoffstrom (56) mit einer ausreichend hohen Rate zugesetzt wird, um Kohlenmonoxid in dem Abgas dem es zugesetzt wird, zu Kohlendioxid umzuwandeln, und so den Kohlenmonoxid-Gehalt des Abgases zu senken.

2. Verfahren gemäß Anspruch 1, bei welchem ferner Beschickungsgut (442; 535) mittels indirektem Wärmeübergang von dem erhaltenen Abgas (436) erwärmt wird, bevor der heiße Sauerstoffstrom (56) in den Abgasstrom eingeleitet wird, und wobei das erwärmte Beschickungsmaterial in den schmelzflüssigen Stahl eingebracht wird.

3. Verfahren gemäß Anspruch 1 oder Anspruch 2, bei welchem der Abgasstrom (52), in den der heiße Sauerstoffstrom (56) eingebracht wird, eine Temperatur von bis zu 982.2 °C (1800 F) hat.

4. Verfahren gemäß Anspruch 1 oder Anspruch 2, bei welchem der heiße Sauerstoffstrom (56), der in Schritt (B) gebildet wurde, in den Abgasstrom (52) in Schritt (C) bei einer Geschwindigkeit von mindestens 152,4 m/s (500 ft/s) eingebracht wird.

5. Verfahren gemäß Anspruch 1 oder Anspruch 2, bei welchem der heiße Sauerstoffstrom (56) der in Schritt (B) gebildet wurde, in den Abgasstrom (52) in Schritt (C) bei einer Geschwindigkeit von 340.3 m/s (Mach 1) eingebracht wird.

6. Verfahren gemäß Anspruch 1 oder Anspruch 2, bei welchem in Schritt (C) der Kohlenmonoxidgehalt des Abgases auf unter 500 ppm gesenkt wird.

7. Verfahren gemäß Anspruch 2, bei welchem das Beschickungsmaterial organisches Material aufweist, und das Abgas, in welchen der heiße Sauerstoffstrom (56) eingebracht wird, gasförmige organische Emissionen enthält, die durch Erwärmen des Beschickungsmaterials gebildet wurden, und wobei der heiße Sauerstoffstrom, der in den Abgasstrom eingeleitet wird, die gasförmigen organischen Emissionen in Produkte umwandelt, die Kohlendioxid und Wasser enthalten.

## Revendications

1. Procédé de traitement d'un flux de gaz de dégagement d'un four d'aciérie comprenant les étapes consistant
(A) à fournir un flux (52) de gaz de dégagement à une température inférieure à 1093,3°C (2000F) par obtention de gaz de dégagement (10) provenant de l'atmosphère au-dessus de la surface de l'acier fondu (22) dans un four (20), lequel gaz de dégagement obtenu contient du monoxyde de carbone en une quantité supérieure à 500 ppm, par admission de l'air dans ledit gaz de dégagement (10) obtenu et par refroidissement dudit gaz de dégagement obtenu jusqu'à la mesure nécessaire pour qu'il soit à une température inférieure à 1093,3°C (2000F) ; **caractérisé par** le fait
(B) de mélanger un combustible (204) et de l'oxygène et de brûler une partie de l'oxygène dans le mélange avec ledit combustible dans une chambre (54) afin de former un flux d'oxygène chaud (56) émergeant d'une sortie dans ladite chambre (54) qui contient l'oxygène, où le temps de séjour de ladite combustion dans ladite chambre (54) est suffisamment long pour que ledit flux d'oxygène chaud présente une température plus élevée que la température du flux de gaz de dégagement auquel il est ajouté à l'étape (C) et ledit temps de séjour est suffisamment court pour que ledit flux d'oxygène chaud contienne les produits de ladite combustion comportant des radicaux choisis dans le groupe constitué de radicaux correspondant aux formules O, H, OH, C₂H, CH₂, CⱼH₂ⱼ₊₁ ou CⱼH₂ⱼ₋ₜ, où j est compris entre 1 et 4, et des mélanges de deux radicaux de ce type ou plus,
(C) d'alimenter le flux d'oxygène chaud (56) formé à l'étape (B) dans le flux (52) de gaz de dégagement fourni à l'étape (A) afin d'élever la température du gaz de dégagement dans ledit flux fourni jusqu'à une température supérieure à 593,3°C (1100F) qui est supérieure à la température du gaz de dégagement auquel ledit flux d'oxydant chaud est ajouté, où le flux d'oxygène chaud (56) est ajouté à un taux suffisant pour convertir le monoxyde de carbone dans le gaz de dégagement auquel il est ajouté en dioxyde de carbone, abaissant ainsi la teneur en monoxyle de carbone dudit gaz de dégagement.

2. Procédé selon la revendication 1 comprenant en outre le chauffage d'un matériau d'alimentation (442 ; 535) par transfert direct de chaleur dudit gaz de dégagement (436) obtenu, avant que ledit flux d'oxygène chaud (56) ne soit alimenté dans ledit flux de gaz de dégagement, et l'alimentation dudit matériau d'alimentation chauffé dans ledit acier fondu.

3. Procédé selon la revendication 1 ou 2, dans lequel le flux (52) de gaz de dégagement dans lequel est alimenté ledit flux d'oxydant chaud (56) est alimenté, a une température pouvant aller jusqu'à 982,2°C (1800F).

4. Procédé selon la revendication 1 ou 2, dans lequel le flux d'oxygène chaud (56) formé à l'étape (B) est alimenté dans le flux (52) de gaz de dégagement à l'étape (C) à une vitesse d'au moins 152,4 m/s (500 pieds par seconde).

5. Procédé selon la revendication 1 ou 2, dans lequel le flux d'oxygène chaud (56) formé à l'étape (B) est alimenté dans le flux de gaz de dégagement (52) à l'étape (C) à une vitesse de 340,3 m/s (Mach 1).

6. Procédé selon la revendication 1 ou 2, dans lequel à l'étape (C) la teneur en monoxyde de carbone dudit gaz de dégagement est diminuée en-dessous de 500 ppm.

7. Procédé selon la revendication 2, dans lequel ledit matériau d'alimentation comprend de la matière organique, et le gaz de dégagement dans lequel est alimenté ledit flux d'oxygène chaud (56) contient des émissions organiques gazeuses formées par ledit chauffage dudit matériau d'alimentation, et ledit flux d'oxygène chaud alimenté dans ledit gaz de dégagement convertit lesdites émissions organiques gazeuses en produits comprenant du dioxyde de carbone et de l'eau.
